(19) Europäisches Patentamt
European Patent Office
Office européen des brevets

(11) **EP 2 350 139 B1**

(12) **EUROPEAN PATENT SPECIFICATION**

(45) Date of publication and mention
of the grant of the patent:
**30.11.2016 Bulletin 2016/48**

(51) Int Cl.:
*C08F 10/02* [(2006.01)]     *C08F 297/08* [(2006.01)]
*C08L 23/06* [(2006.01)]     *C08J 3/24* [(2006.01)]

(21) Application number: **09741250.6**

(86) International application number:
**PCT/EP2009/007783**

(22) Date of filing: **30.10.2009**

(87) International publication number:
**WO 2010/049167 (06.05.2010 Gazette 2010/18)**

(54) **MULTIMODAL POLYMER**

MULTIMODALES POLYMER

POLYMÈRE MULTIMODAL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.10.2008 EP 08253583**

(43) Date of publication of application:
**03.08.2011 Bulletin 2011/31**

(73) Proprietor: **Borealis AG
1220 Vienna (AT)**

(72) Inventors:
• **PAKKANEN, Anneli
FI-01120 Västerskog (FI)**

• **VAHTERI, Markku
FI-06100 Porvoo (FI)**
• **PALMLÖF, Magnus
S-42671 Västra Frölunda (SE)**
• **ODERKERK, Jeroen
S-444 52 Stenungsund (SE)**

(74) Representative: **Campbell, Neil Boyd
Dehns
St Bride's House
10 Salisbury Square
London
EC4Y 8JD (GB)**

(56) References cited:
**EP-A- 1 927 626     EP-A- 1 927 627**

**Description**

This invention concerns a process for the manufacture of a cross-linked multimodal polyethylene as well as the cross-linked or cross-linkable multimodal polyethylene itself. The invention also covers cross-linked multimodal polyethylene pipes, made by cross-linking the cross-linkable polyethylene.

The use of polymers for pipes for various purposes, such as fluid transport, e.g. transport of liquids or gases such as water or natural gas is known. It is common for the fluid to be pressurised in these pipes. Such pipes can be made of polyethylene such as medium density polyethylene (MDPE) or high density polyethylene (HDPE), typically having a density of about than 950 kg/m$^3$.

Pipes can be manufactured using various techniques such as RAM extrusion or screw extrusion. Screw extrusion is one of the core operations in polymer processing and is also a key component in many other processing operations. An important aim in a screw extrusion process is to build pressure in a polymer melt so that it can be extruded through a die.

Crosslinking improves parameters such as heat deformation resistance and therefore pipes for hot water applications, such as pipes for floor heating, or for hot water distribution are usually made of crosslinked polyethylene (PEX). However, prior art pipes such as pipes of crosslinked unimodal high density polyethylene (HDPE-X) have several drawbacks. Thus, in order to meet the high demands of the so-called HDPE-X norm for hot and cold water applications (e.g. EN ISO 15875) it is necessary to use polyethylene of a relatively high density. This makes the resulting pipe relatively stiff. This stiffness becomes even more pronounced when barrier layers are applied on top of or within the core pipe.

In order to improve the crosslinking response and hence reduce the consumption of crosslinking agent, e.g. peroxide, when crosslinking pipes of polyethylene, it is generally desired to use an ethylene polymer of relatively low melt flow rate (MFR), i.e. high molecular weight. However, this results in the drawback of poor processability, i.e. a reduced line speed at extrusion.

Another problem that may arise is insufficient melt strength when using polymers having a higher MFR in order to achieve better extrudability. In a pipe manufacturing system, where pipes are extruded and crosslinked in a separate system, melt strength is required to keep dimensional stability of the partly molten, uncrosslinked pipe until it becomes crosslinked. In the worst case, lack of melt strength means that it may not be possible to prepare a pipe from the polymer, because the polymer parison collapses when it exits from the extruder. Higher MFR resins also have poorer crosslinkability, which results in that a larger amount of crosslinking agent or a stronger irradiation dose must be used.

WO2005/095838 addresses this problem and offers as a solution a particular unimodal single site ethylene polymer. Related disclosures EP-A-1927626 and EP-A-1927627 describe a pipe formed from a lower molecular weight copolymer component and a higher molecular weight homopolymer component having a density of less than 940 kg/m$^3$. In both of those disclosures, the polymer composition forming the pipe is not crosslinked.

The present inventors sought to solve the problems of good cross-linking ability combined with good processability, in particular in a screw extrusion process.

It is an object of the present invention to provide a polymer composition with improved crosslinking response, e.g. with a cross-linking degree of at least 70% and flexibility and with good processability making pipe manufacture, especially using screw extrusion, possible. The inventors' experience is that it is difficult to manufacture a polymer which is both excellent in terms of its processability and which still provides sufficient crosslinkability. To maintain good processability in a screw extrusion process, a balance between $M_w$ and $M_w/M_n$ is needed. In the case of single site produced polyethylene (SSC PE), bi or multimodal resins are therefore desired. Furthermore, to avoid yellowness, gels and inhomogenieties, it is desirable to use resins with as low ash content as possible, i.e. the resin should be made with a catalyst with high enough activity. The inventors have now found that a particular polymer possesses all these features.

Thus viewed from a first aspect the invention provides a cross-linked polyethylene produced by crosslinking a multimodal ethylene polymer with a density of less than 950 kg/m$^3$, obtained by polymerisation with a single-site catalyst and having an $MFR_{21}$ in the range of 2 to 15, and a shear thinning index $SHI_{2.7/210}$ of between 5 and 10.

Viewed from a second aspect the invention provides the use of a multimodal ethylene polymer with a density of less than 950 kg/m$^3$ obtained by polymerisation with a single-site catalyst and having an $MFR_{21}$ in the range of 2 to 15, a shear thinning index $SHI_{2.7/210}$ of between 5 and 10, in the manufacture of a cross-linked pipe.

Viewed from a third aspect the invention provides a cross-linked pipe comprising a crosslinked ethylene polymer according to the first aspect.

Viewed from a fourth aspect the invention provides a process for the preparation of a crosslinked polymer, comprising mixing a multimodal ethylene polymer with a density of less than 950 kg/m$^3$, obtained by polymerisation with a single-site catalyst and having an $MFR_{21}$ in the range of 2 to 15, and a shear thinning index $SHI_{2.7/210}$ of between 5 and 10, with 0.4 to 0.8 wt% peroxide and initiating a cross-linking reaction, e.g. by irradiation or application of heat.

Viewed from a fifth aspect the invention provides a multimodal ethylene polymer with a density in the range of 940 to less than 950 kg/m$^3$ obtained by polymerisation with a single-site catalyst and having an $MFR_{21}$ in the range of 2 to 15, a shear thinning index $SHI_{2.7/210}$ of between 5 and 10 and wherein said multimodal ethylene polymer has a lower molecular weight ethylene homopolymer component and a higher molecular weight ethylene copolymer component.

Viewed from a sixth aspect the invention provides a multimodal ethylene polymer according to the fifth aspect further comprising at least one additive and/or other olefinic component.

**Multimodal Ethylene Polymer**

By ethylene polymer is meant a polymer in which ethylene is the major repeating unit. Unless expressly stated otherwise, the properties of the multimodal ethylene polymer are to be read as the properties of the crosslinked polymer prior to be crosslinked. The ethylene polymer of the present invention has a density of less than 950 kg/m$^3$, preferably less than 949 kg/m$^3$, preferably at most 947 kg/m$^3$, e.g. no more than 945 kg/m$^3$. Ideally the polymer will have a density of at least 920 kg/m$^3$, e.g. at least 925 kg/m$^3$. A preferred density range may be 932-less than 950 kg/m$^3$, especially 940 to less than 950 kg/m$^3$. This density is made possible by the single-site catalysed polymerisation of the ethylene polymer and has several advantages. The lower than normal density polymer means that the pipe prepared therefrom is more flexible. This is of importance, *inter alia,* for pipes intended, e.g. for floor heating. Further, a lower density ethylene polymer base resin means a lower crystallinity which in turn means that less energy is required to melt the polymer. This results in an enhanced production speed when manufacturing pipes.

Still further and importantly, the low density/crystallinity single-site catalysed ethylene polymer of the present invention surprisingly gives the same or improved pressure test performance as prior art materials with higher density/crystallinity, i.e. a certain pressure test performance can be obtained with a more flexible pipe according to the present invention than with a traditional material with higher density and crystallinity.

The ethylene polymer of the invention preferably has a $MFR_{21}$ of 2-15 g/10 min, more preferably 3 to 12 g/10 min, especially 5 to 10 g/10min.

The MFR is an indication of the flowability, and hence the processability, of the polymer. The higher the melt flow rate, the lower the viscosity of the polymer. MFR is also important to ensure sufficient cross-linking ability. This range for $MFR_{21}$ ensures that the cross-linking ability of the claimed polymer is excellent. Moreover, the minimum value of 2 g/10min for the $MFR_{21}$ ensures that the polymer is extrudable in the screw extruder. Lower values of $MFR_{21}$ represent polymers which are simply too viscous to extrude.

$MFR_5$ values may range from 0.01 to 2 g/10 min. Ideally the $MFR_5$ value is less than 1 g/10min.

The ethylene polymers of the invention preferably have molecular weight, $M_w$ of at least 100,000, preferably at least 120,000, especially at least 150,000, e.g. at least 175,000.

$M_n$ values are preferably at least 25,000, more preferably at least 30,000.

The single-site catalysed ethylene polymer of the present invention has a narrow molecular weight distribution as defined by its shear thinning index (SHI). The SHI is the ratio of the complex viscosity $(\eta^*)$ at two different shear stresses and is a measure of the broadness (or narrowness) of the molecular weight distribution. According to the present invention the ethylene polymer has a shear thinning index $SHI_{2.7/210}$, i.e. a ratio of the complex viscosity at 190°C and a shear stress of 2.7 kPa $(\eta^*_{2.7})$ and the complex viscosity at 190°C and a shear stress of 210 kPa $(\eta^*_{210})$, 5 to 10, preferably 6 to 8.

Where the SHI value is greater than 10, the cross-linkability of the material is unacceptable. If SHI is less than 5 the molecular weight distribution is too narrow.

Another way to measure molecular weight distribution (MWD) is by GPC. The molecular weight distribution (MWD value) according to the present invention is preferably in the range 4 to 10, preferably 4.5 to 8. The narrow molecular weight distribution range enhances crosslinkability, e.g. less peroxide or radiation is required to obtain a certain crosslinking degree.

According to a preferred embodiment of the invention the ethylene polymer has a complex viscosity at a shear stress of 5 kPa at190°C, $(n^*_{5kPa})$, of at least 20,000 Pas, more preferably at least 30,000 Pas, especially at least 40,000 Pas.

According to another preferred embodiment of the invention the ethylene polymer has a complex viscosity at a shear stress of 2.7 kPa at 190°C, $(n^*_{2.7kPa})$ of at least 20,000 Pas, more preferably at least 30,000 Pas, especially at least 40,000 Pas.

According to another preferred embodiment of the invention the ethylene polymer has a complex viscosity at a shear stress of 0.05 rad/s at 190°C, $(n^*_{0.05rad/s})$, of at least 20,000 Pas, more preferably at least 30,000 Pas, especially at least 40,000 Pas.

A further benefit of the process of the invention and hence of the polymers of the invention is low ash content and excellent particle size distribution. High ash content samples are more prone to oxidation and by using a two reactor process, the formed polymers have less ash and a much more even distribution of ash with absence of particles with very high ash content.

The ash content of the ethylene polymer of the invention may be less than 500 ppm, preferably less than 300 ppm, especially less than 250 ppm, e.g. less than 200 ppm. It will be appreciated that ash contents are effected by polymerisation conditions, especially the partial pressure of ethylene used during the polymerisation. Lower ethylene partial pressures tend to cause more ash.

It is also observed that the process of the invention ensures a better ash content distribution (i.e. an ash present is distributed across a broader range of particles and is not concentrated in a particular polymer fraction). It has been noted that high levels of ash are particularly prevalent in smaller particles when the polymer is unimodal and made in a single polymerisation stage. High ash content is thus a major issue in particles which pass through a 0.355 mm sieve, i.e. have a diameter less than 0.355 mm. In the present invention ash content in particles of less than 0.355 mm can be less than 500 ppm, preferably less than 400 ppm.

The smaller the particles, the more significant the ash content issues. In particles which pass through a 0.25 mm sieve the ash content is preferably less than 300 ppm, preferably less than 260 ppm.

For particles which pass through a 0.1 mm sieve ash contents are preferably less than 300 ppm.

A low ash content is also associated with low yellowness indices for articles made from the polymer. Thus, articles made from the ethylene polymer of the invention (preferably the cross-linked ethylene polymer of the invention) may have yellowness indices of less than 2, preferably less than 1.5.

The multimodal ethylene polymer of the invention comprises at least two components. Whilst the ethylene polymer may be manufactured by blending, the ethylene polymer of the invention is preferably produced in situ and in at least two stages, ideally two stages only, and therefore contains at least two fractions, preferably two fractions only.

The term "multimodal" means herein, unless otherwise stated, multimodality with respect to molecular weight distribution and includes therefore a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The multimodal polymer usable in the present invention comprises a lower weight average molecular weight (LMW) component and a higher weight average molecular weight (HMW) component. Said LMW component has a lower molecular weight than the HMW component.

In one preferable embodiment, said multimodal polymer comprises at least (i) a lower weight average molecular weight (LMW) ethylene homopolymer or copolymer component, and (ii) a higher weight average molecular weight (HMW) ethylene homopolymer or copolymer component. Preferably, at least one of said LMW and HMW components is a copolymer of ethylene with at least one comonomer. It is preferred that at least said HMW component is an ethylene copolymer. Alternatively, if one of said components is a homopolymer, then said LMW is the preferably the homopolymer.

Alternatively, said multimodal ethylene polymer may comprise further polymer components, e.g. three components being a trimodal ethylene polymer. Optionally multimodal ethylene polymers of the invention may also comprise e.g. up to 10 % by weight of a well known polyethylene prepolymer which is obtainable from a prepolymerisation step as well known in the art, e.g. as described in WO9618662. In case of such prepolymer, the prepolymer component is comprised in one of LMW and HMW components, preferably LMW component, as defined above.

Preferably said multimodal polymer is bimodal comprising said LMW and HMW components and optionally a prepolymerised fraction as defined above.

Said LMW component of multimodal polymer preferably has a $MFR_2$ of at least 5 g/10 min, preferably below 50 g/10 min, e.g. up to 40 g/10 min, such as between 5 to 20 g/10 min.

The density of LMW component of said multimodal polymer may range from 930 to 980 kg/m$^3$, e.g. 930 to 970 kg/m$^3$, more preferably 935 to 960 kg/m$^3$.

The LMW component of said multimodal polymer may form from 30 to 70 wt%, e.g. 40 to 60% by weight of the multimodal polymer with the HMW component forming 70 to 30 wt%, e.g. 40 to 60% by weight. In one embodiment said LMW component forms 50 wt% or more of the multimodal polymer as defined above or below.

The HMW component of said multimodal ethylene polymer has a lower $MFR_2$ than the LMW component. The $M_w$ difference between components should be at least 5000.

The ethylene polymer of the invention may be an ethylene homopolymer or copolymer. By ethylene homopolymer is meant a polymer which is formed essentially only ethylene monomer units, i.e. is 99.9 wt ethylene or more. It will be appreciated that minor traces of other monomers may be present due to industrial ethylene containing trace amounts of other monomers.

The ethylene polymer of the invention may also be a copolymer and can therefore be formed from ethylene with at least one other comonomer, e.g. $C_{3-20}$ olefin. Preferred comonomers are alpha-olefins, especially with 3-8 carbon atoms. Other comonomers of value are dienes. The use of dienes as comonomer increases the level of unsaturation in the polymer and thus is a way to further enhance crosslinkability. Preferred dienes are $C_{4-20}$-dienes where at least one double bond is at the 1-position of the diene. Especially preferred dienes are dienes containing a tertiary double bond. By the term "tertiary double bond" is meant herein a double bond that is substituted by three non-hydrogen groups (e.g. by three alkyl groups).

Preferably, the comonomer is selected from the group consisting of propene, 1-butene, 1-hexene, 4-methyl-1-pentene, 1-octene, 1,7-octadiene and 7-methyl- 1,6-octadiene.

The polymers of the invention can comprise one monomer or two monomers or more than 2 monomers. The use of a single comonomer is preferred. If two comonomers are used it is preferred if one is an $C_{3-8}$ alpha-olefin and the other is a diene as hereinbefore defined.

The amount of comonomer is preferably such that it comprises 0-3 mol%, more preferably 0-1.5 mol% and most preferably 0-0.5 mol% of the ethylene polymer.

It is preferred however if the ethylene polymer of the invention comprises a LMW homopolymer component and a HMW ethylene copolymer component, e.g. an ethylene hexene copolymer component.

The polymer of the invention is prepared by single-site catalysed polymerisation and has a low density and a narrow molecular weight distribution for a multimodal material. The use of a single-site catalysed ethylene polymer gives better pressure test performance for a given density level than corresponding prior art materials. Therefore, a polymer of lower density may be used which results in a more flexible pipe. Moreover, a polymer of lower density also requires less energy to melt which is beneficial in terms of pipe manufacturing. Further, the use of single site catalysed low MFR polymer allows a lower amount of crosslinking agent to be used to reach the desired degree of crosslinking. The polyethylene as defined above useful may be made using any conventional single site catalysts, including metallocenes and non-metallocenes as well known in the field, in particular metallocenes.

Preferably said catalyst is one comprising a metal coordinated by one or more η-bonding ligands. Such η-bonded metals are typically transition metals of Group 3 to 10, e.g. Zr, Hf or Ti, especially Zr or Hf. The η-bonding ligand is typically an $\eta^5$-cyclic ligand, i.e. a homo or heterocyclic cyclopentadienyl group optionally with fused or pendant substituents. Such single site, preferably metallocene, procatalysts have been widely described in the scientific and patent literature for about twenty years. Procatalyst refers herein to said transition metal complex.

The metallocene procatalyst may have a formula II:

$$(Cp)_m R_n M X_q \qquad (II)$$

wherein:

each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$ or -NR"$_2$,

each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$=cycloalkyl or $C_6$-$C_{20}$-aryl; or e.g. in case of - NR"$_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as $C_{1-20}$-alkyl, tri($C_{1-20}$-alkyl)silyl, tri($C_{1-20}$-alkyl)siloxy or $C_{6-20}$-aryl substituents); or a bridge of 1-3, e.g. one or two, hetero atoms, such as silicon, germanium and/or oxygen atom(s), e.g. - SiR$^1_2$-, wherein each R$^1$ is independently $C_{1-20}$-alkyl, $C_{6-20}$-aryl or tri($C_{1-20}$-alkyl)silyl- residue, such as trimethylsilyl;

M is a transition metal of Group 3 to 10, preferably of Group 4 to 6, such as Group 4, e.g. Ti, Zr or Hf, especially Hf;

each X is independently a sigma-ligand, such as H, halogen, $C_{1-20}$-alkyl, $C_{1-20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$, -SiR"$_3$, -OSiR"$_3$, -NR"$_2$ or -CH$_2$-Y, wherein Y is $C_6$-$C_{20}$-aryl, $C_6$-$C_{20}$-heteroaryl, $C_1$-$C_{20}$-alkoxy, $C_6$-$C_{20}$-aryloxy, NR"$_2$, -SR", -PR"$_3$, -SiR"$_3$, or -OSiR"$_3$;

each of the above mentioned ring moieties alone or as a part of another moiety as the substituent for Cp, X, R" or R$^1$ can further be substituted e.g. with $C_1$-$C_{20}$-alkyl which may contain Si and/or O atoms;

n is 0, 1 or 2, e.g. 0 or 1,

m is 1, 2 or 3, e.g. 1 or 2,
q is 1, 2 or 3, e.g. 2 or 3,

wherein m+q is equal to the valency of M.

Suitably, in each X as -$CH_2$-Y, each Y is independently selected from $C_6$-$C_{20}$-aryl, NR"$_2$, -SiR"$_3$ or -OSiR"$_3$. Most preferably, X as -$CH_2$-Y is benzyl. Each X other than -$CH_2$-Y is independently halogen, $C_1$-$C_{20}$-alkyl, $C_1$-$C_{20}$-alkoxy, $C_6$-$C_{20}$-aryl, $C_7$-$C_{20}$-arylalkenyl or -NR"$_2$ as defined above, e.g. -N($C_1$-$C_{20}$-alkyl)$_2$.

Preferably, q is 2, each X is halogen or -$CH_2$-Y, and each Y is independently as defined above.

Cp is preferably cyclopentadienyl, indenyl, tetrahydroindenyl or fluorenyl, optionally substituted as defined above.

In a suitable subgroup of the compounds of formula II, each Cp independently bears 1, 2, 3 or 4 substituents as defined above, preferably 1, 2 or 3, such as 1 or 2 substituents, which are preferably selected from $C_1$-$C_{20}$-alkyl, $C_6$-$C_{20}$-aryl, $C_7$-$C_{20}$-arylalkyl (wherein the aryl ring alone or as a part of a further moiety may further be substituted as indicated above), -OSiR"$_3$, wherein R" is as indicated above, preferably $C_1$-$C_{20}$-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R" is other than hydrogen.

A specific subgroup includes the well known metallocenes of Zr, Hf and Ti with two η-5-ligands which may be bridged or unbridged cyclopentadienyl ligands optionally substituted with e.g. siloxy, or alkyl (e.g. $C_{1-6}$-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -SiMe$_2$.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a η1 or η2 ligand, wherein said ligands may or may not be bridged to each other. Such compounds are described e.g. in WO-A-9613529, the contents of which are incorporated herein by reference.

Further preferred metallocenes include those of formula (I)

$$Cp'_2HfX'_2$$

wherein each X' is halogen, $C_{1-6}$ alkyl, benzyl or hydrogen;
Cp' is a cyclopentadienyl or indenyl group optionally substituted by a $C_{1-10}$ hydrocarbyl group or groups and being optionally bridged, e.g. via an ethylene or dimethylsilyl link.

Especially preferred catalysts are bis- (n-butyl cyclopentadienyl) hafnium dichloride, bis- (n-butyl cyclopentadienyl) zirconium dichloride and bis- (n-butyl cyclopentadienyl) hafnium dibenzyl, the last one being especially preferred.

Metallocene procatalysts are generally used as part of a catalyst system which also includes a catalyst activator, called also as cocatalyst. Useful activators are, among others, aluminium compounds, like aluminium alkoxy compounds. Suitable aluminium alkoxy activators are for example methylaluminoxane (MAO), hexaisobutylaluminoxane and tetraisobutylaluminoxane. In addition boron compounds (e.g. a fluoroboron compound such as triphenylpentafluoroboron or triphentylcarbenium tetraphenylpentafluoroborate (($C_6H_5$)$_3$B+B-($C_6F_5$)$_4$)) can be used as activators. The cocatalysts and activators and the preparation of such catalyst systems is well known in the field. For instance, when an aluminium alkoxy compound is used as an activator, the Al/M molar ratio of the catalyst system (Al is the aluminium from the activator and M is the transition metal from the transition metal complex) is suitable from 50 to 500 mol/mol, preferably from 100 to 400 mol/mol. Ratios below or above said ranges are also possible, but the above ranges are often the most useful.

If desired the procatalyst, procatalyst/cocatalyst mixture or a procatalyst/cocatalyst reaction product may be used in supported form (e.g. on a silica or alumina carrier), unsupported form or it may be precipitated and used as such. One feasible way for producing the catalyst system is based on the emulsion technology, wherein no external support is used, but the solid catalyst is formed from by solidification of catalyst droplets dispersed in a continuous phase. The solidification method and further feasible metallocenes are described e.g. in WO03/051934 which is incorporated herein as a reference.

It is also possible to use combinations of different activators and procatalysts. In addition additives and modifiers and the like can be used, as is known in the art.

Any catalytically active catalyst system including the procatalyst, e.g. metallocene complex, is referred herein as single site or metallocene catalyst (system).

It is preferred if the same single site catalyst is used in each stage of the manufacture of the ethylene polymer of the invention. It is thus preferred if the catalyst added in the first stage of the process is transferred to the second polymerisation stage. This of course maximises residence time and provides improvements in ash content and yields.

Preparation of cross-linkable polymer

For the preparation of the ethylene polymer of the present invention polymerisation methods well known to the skilled person may be used. It is within the scope of the invention for a multimodal, e.g. at least bimodal, polymer to be produced by blending each of the components in-situ during the polymerisation process thereof (so called in-situ process) or, alternatively, by blending mechanically two or more separately produced components in a manner known in the art. The multimodal polyethylene useful in the present invention is preferably obtained by in-situ blending in a multistage polymerisation process. Accordingly, polymers are obtained by in-situ blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the polyethylene polymer of the invention is produced in at least two-stage polymerization using the same single site catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EF517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer, e.g. ethylene.

A chain-transfer agent, preferably hydrogen, can be added as required to the reactors. It is preferred if the amount of hydrogen used in the manufacture of the first component is very low. Preferably therefore, the amount is less than 1, preferably less than 0.5, e.g. 0.05 to 0.5 mol of $H_2$/kmoles of ethylene are added to the first, e.g. loop reactor.

The amount of hydrogen added to the second reactor, typically gas phase reactor is also low. Values may range from 0.01 to 1, e.g. 0.05 to 0.5 moles of $H_2$/kmoles of ethylene.

Preferably, the first polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane. The reaction product is then transferred, preferably to continuously operating gas phase reactor. The second component can then be formed in a gas phase reactor using preferably the same catalyst.

A prepolymerisation step may precede the actual polymerisation process.

The ethylene partial pressure in the loop reactor is preferably between 10 and 15 mol%. In the gas phase it is preferably above 50 mol%.

The ethylene polymer of the invention can be blended with any other polymer of interest or used on its own as the only olefinic material in an article. Thus, the ethylene polymer of the invention can be blended with known HDPE, MDPE, LDPE, LLDPE polymers or a mixture of ethylene polymers of the invention could be used. Ideally however any article made from the ethylene polymer is the invention consists essentially of the polymer, i.e. contains the ethylene polymer along with standard polymer additives only.

The ethylene polymer of the invention may be blended with standard additives, fillers and adjuvants known in the art. It may also contain additional polymers, such as carrier polymers of the additive masterbatches. Preferably the ethylene polymer comprises at least 50 % by weight of any polymer composition containing the ethylene polymer, preferably from 80 to 100 % by weight and more preferably from 85 to 100 % by weight, based on the total weight of the composition.

Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups.

Examples of sterically hindered phenols are, among others, 2,6-di-tert-butyl - 4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010) octadecyl-3-3(3'5'-di-tert-butyl-4'-hydroxyphenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-*t*-butylphenyl) phosphite (sold, e.g., by Ciba Specialty Chemicals under the trade name of Irgafos 168), tetrakis-(2,4-di-*t*-butylphenyl)-4,4'-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4)

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'-dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), *p*-(*p*-toluene-sulfonylamido)-diphenylamine (sold, e.g., by Chemtura under the trade name of Naugard SA) and *N,N'*-diphenyl-*p*-phenylene-diamine (sold, e.g., by Chemtura under the trade name of Naugard J).

Commercially available blends of antioxidants and process stabilizers are also available, such as Irganox B225, Irganox B215 and Irganox B561 marketed by Ciba-Specialty chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch where it is premixed with a polymer, preferably high density polyethylene (HDPE), in a specific amount. Suitable masterbatches are, among others, HD4394, sold by Cabot Corporation, and PPM1805 by Poly Plast Muller. Also titanium dioxide may be used as an UV-screener.

## Applications

The polymer of the invention is cross-linkable and is ideal for use in the formation of cross-linked pipes. Cross-linking of the polymer/pipe can be achieved in conventional ways e.g. using peroxide, irradiation or silane cross-linkers. In peroxide crosslinking, the crosslinking takes place by the addition of peroxide compounds, such as dicumyl peroxide, which form free radicals. Cross-linking can also be achieved by irradiation or using silanes.

At a predetermined amount of peroxide or irradiation, a lower molecular weight (higher MFR) polymer may be used than in the prior art. According to the present invention the absence of very low molecular weight tail in single-site catalyst polymers results in improved crosslinkability.

Low molecular weight polymers require a higher amount of peroxide to achieve an efficient network structure.

Peroxide cross-linking is preferred For example the amount of peroxide added may be in the range 0.3 to 1 wt%, preferably 0.4 to 0.8 wt%.

The polymers of the invention can exhibit a cross-linking degree of at least 50 wt%, preferably at least 60 wt%, more preferably at least 70%, e.g. at least 75%, (78,4 in the example with 1 % peroxide solution). In particular, the ethylene polymer of the invention may have a degree of crosslinking ≥50% as measured using 0.4% Trigonox 145 E85 following the protocols below. Trigonox 145 E 85 is an oil solution that contains 85 wt-% peroxide (2,5-dimethyl-2,5-ditertbutylperoxy hexyne). The peroxide is diluted in the oil the make it safer and easier to handle.

Pipes according to the present invention are produced according to the methods known in the art. Thus, according to one preferred method the polymer composition is extruded through an annular die to a desired internal diameter, after which the polymer composition is cooled.

Extruders having a high length to diameter ratio L/D more than 15, preferably of at least 20 and in particular of at least 25 are preferred. The modern extruders typically have an L/D ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). The inside of the extrudate is pressurised so that the plastic is pressed against the wall of the tube. The tube is cooled by using a jacket or by passing cold water over it.

According to another method a water-cooled extension is attached to the end of the die mandrel. The extension is thermally insulated from the die mandrel and is cooled by water circulated through the die mandrel. The extrudate is drawn over the mandrel which determines the shape of the pipe and holds it in shape during cooling. Cold water is flowed over the outside pipe surface for cooling.

According to still another method the extrudate leaving the die is directed into a tube having perforated section in the centre. A slight vacuum is drawn through the perforation to hold the pipe hold the pipe against the walls of the sizing chamber.

After the sizing the pipe is cooled, typically in a water bath having a length of about 5 metres or more.

The pipes according to the present invention fulfil the requirements of PE80 standard as defined in EN 12201 and EN 1555, alternatively ISO 4427 and ISO 4437, evaluated according to ISO 9080. Especially preferably the pipes fulfill EN ISO 15875.

It is preferred if the ethylene polymer of the invention has a degree of crosslinking corresponding to a max torque of at least 5 dNm as measured by Monsanto device when using 0.4% Trigonox 145 E85 as detailed below.

Generally, polymer pipes are manufactured by extrusion therefore. A conventional plant for screw extrusion of PEX polymer pipes comprises a single or double screw extruder, a nozzle, a calibrating device, a crosslinking unit, cooling equipment, a pulling device, and a device for cutting or for coiling-up the pipe. The polymer, pre-soaked with a suitable amount of peroxide is extruded into a pipe from the extruder and thereafter the pipe is crosslinked in the crosslinking unit. This process step requires that the pipe has sufficient melt strength so that the uncrosslinked pipe does not collapse before it gets to the crosslinking unit. This screw extrusion technique is well known to the skilled person and no further particulars should therefore be necessary here. The ethylene polymers of the invention are particularly suitable for screw extrusion. Pipes of the invention are preferably PEX pipes, especially water pipes, more especially hot water pipes.

Another type of extrusion of polymer pipes is the so-called ram extrusion where peroxide soaked polymer powder is charged batchwise into an extrusion cylinder and compressed with a ram in the heated zone of the extrusion cylinder. Melting and crosslinking of the polymer takes place simultaneously. After a charge has been pressed the ram is lifted, the crosslinked pipe is expelled and another charge of polymer is metered into the extrusion cylinder.

The pipe of the present invention is prepared by extrusion and more particularly by screw extrusion.

As indicated above, a problem that may be encountered, particularly when increasing the output by using a polymer having a higher MFR, when extruding a polymer pipe and crosslinking it in a separate, downstream crosslinking unit, is that the polymer parison that leaves the extruder has insufficient melt strength. This may result in the parison collapsing.

According to a preferred embodiment of the invention this problem of insufficient melt strength is overcome by adding a small amount of peroxide to the polymer before the extrusion in order to decompose the peroxide during the extrusion and introducing long-chain branching in the polymer. The long-chain branching introduced during the extrusion affords the polymer that leaves the extruder with enhanced melt strength so that the pipe parison does not collapse, but maintains its shape until it reaches the downstream crosslinking unit where it is crosslinked to the final crosslinking degree. The peroxide added to introduce long-chain branching should have a decomposition temperature below about 150°C in order to decompose readily during the extrusion. The amount of such peroxide added should be enough to introduce the desired amount of long-chain branching, and should preferably be less than 500 ppm, more preferably 50-500 ppm, and still more preferably 100-500 ppm. The peroxide used for the crosslinking of the pipe in the downstream crosslinking unit should have a higher decomposition temperature such as at least 150°C, preferably at least 160°C, and more preferably 160-200°C.

The higher decomposition temperature of this second peroxide should ensure that it does not decompose prematurely during the extrusion of the polymer.

It will be appreciated that the preferred features of the polymers of the invention as described herein can all be combined with each other in any way.

The invention will now be described with reference to the following non limiting examples

## Analytical tests

### Melt Flow Rate

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

The quantity FRR (flow rate ratio) is an indication of molecular weight distribution and denotes the ratio of flow rates at different loads. Thus, $FRR_{21/2}$ denotes the value of $MFR_{21}/MFR_2$.

### Density

Density of the polymer was measured according to ISO 1183 / 1872-2B.

For the purpose of this invention the density of the blend can be calculated from the densities of the components according to:

$$\rho_b = \sum_i w_i \cdot \rho_i$$

where

$\rho_b$ is the density of the blend,
$w_i$ is the weight fraction of component "i" in the blend and
$\rho_i$ is the density of the component "i".

Molecular weight

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1 x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:

$$Mw_b = \sum_i w_i \cdot Mw_i$$

where

$Mw_b$ is the weight average molecular weight of the blend,
$w_i$ is the weight fraction of component "i" in the blend and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where

$Mn_b$ is the weight average molecular weight of the blend,
$w_i$ is the weight fraction of component "i" in the blend and
$Mn_i$ is the weight average molecular weight of the component "i".

Rheology

Rheological parameters such as Shear Thinning Index SHI and Viscosity are determined by using a rheometer, preferably a Anton Paar Physica MCR 300 Rheometer on compression moulded samples under nitrogen atmosphere at 190 °C using 25 mm diameter plates and plate and plate geometry with a 1.8 mm gap according to ASTM 1440-95. The oscillatory shear experiments were done within the linear viscosity range of strain at frequencies from 0.05 to 300 rad/s (ISO 6721-1). Five measurement points per decade were made. The method is described in detail in WO 00/22040.

The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s.

Shear thinning index (SHI), which correlates with MWD and is independent of $M_w$, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.).

SHI value is obtained by calculating the complex viscosities at given values of complex modulus and calculating the ratio of the two viscosities. For example, using the values of complex modulus of 2.7 kPa and 210 kPa, then $\eta^*_{2.7kPa}$ and $\eta^*_{210kPa}$ are obtained at a constant value of complex modulus of 2.7 kPa and 210 kPa, respectively, The shear thinning index $SHI_{2.7/210}$ is then defined as the ratio of the two viscosities $\eta^*_{2.7}$ and $\eta^*_{210}$, i.e. $\eta_{2.7}/\eta_{210}$.

It is not always practical to measure the complex viscosity at a low value of the frequency directly. The value can be extrapolated by conducting the measurements down to the frequency of 0.126 rad/s, drawing the plot of complex viscosity vs. frequency in a logarithmic scale, drawing a best-fitting line through the five points corresponding to the lowest values of frequency and reading the viscosity value from this line.

Yellowness Index

Yellowness Index (YI) is a number calculated from spectrophotometric data that describes the change in color of a test sample from clear or white towards yellow. This test is most commonly used to evaluate color changes in a material caused by real or simulated outdoor exposure. The spectrophotometric instrument is a Spectraflash SF600 with ColorTools software which calculate the yellowness index E 313 according to ASTM E313. On the sample holder and pipe sample is tested.

The yellowness index is rated as follows:

|  | Rating 1 | Rating 2 | Rating 3 | Rating 4 |
|---|---|---|---|---|
| YI according to ASTM E313 | < (-0,9) | (-0 ,9)-1,5 | 1,5-6,5 | > 6,5 |

Ash Content

For ash content < 1000 ppm the so called "burning method" is employed.

- Heat up two clean platinum cups at 870°C for 15 minutes and afterwards cool them to room temperature in an desiccator
- Measure weight of the cups directly from the desiccator to 0.1 mg.
- Weight 15 g of polymer powder into the platinum cups (to 0.1 mg), (after sieving the powder).
- Burn up this powder in an burning device until all material has burnt (i.e. the flame dies).
- Place the cups in a burning oven at 870°C for 45 minutes.
- Cool the cups in an desiccator to room temperature and measure the weight of the cups to 0.1 mg.
- The weight of the ash content is the weight of the cup with ash content minus the weight of the empty cup.
- Ash content calculation: (gram ash/gram original powder)* 100=weight % ash content

Torque

The polymers were received as powders and were sieved before use. Only particles smaller than 2,0 mm in diameter are included. Each sample was prepared by adding 99,3 wt% polyethylene and 0,3 wt% antioxidant, Irganox B225 (received from Ciba), to a glass bottle. The bottles were shaken and to each sample, 0,4 wt% Trigonox 145 E85, received from Akzo Nobel) was added drop by drop. The total sample weight was 100 g. Where higher concentrations of peroxide were used, the amount of polymer was reduced accordingly.

Soaking was performed by rotation of samples during 20 h in a Heraeus Instruments rotation oven at room temperature.

After soaking, the polymer powder was compression moulded into circular discs (Ca:3mm thick. Diameter:40 mm). in a Specac compression moulding machine. This was done at a temperature of 122 °C, under a pressure of 5 kPa for 2 minutes, followed by cooling for 2 minutes under the same pressure. The cross-linking was performed in a Monsanto Rheometer (MDR 2000 E), an instrument which measures the torque (Nm or dNm) vs. time by oscillating movements (0.5 degrees with a moving frequncy of 50 times per minute in air atmosphere) and it is therefore possible to study at what time the cross-linking starts and to what degree it is achieved. Measurements were performed for 5 minutes at 200°C, on two samples from each material. The parameter t90 is the time it takes to reach 90% of the final torque value achieved after the complete measuring time, in this case 5 minutes.

Degree of crosslinking (XL, %)

Degree of crosslinking was measured by decaline extraction (Measured according to ASTM D 2765-01, Method A) on the crosslinked material subjected to the Rheometer testing.

**Preparation Example 1**

Preparation of the catalyst

The catalyst system is based on complex bis(n-butylcyclopentadienyl)hafnium dibenzyl (n-BuCp)$_2$HfBz$_2$. The Catalyst system is prepared according to the principles disclosed in WO03/051934 as follows:

In a jacketed 90 dm$^3$ glass-lined stainless steel reactor the complex solution was prepared at -5°C adding 1,26 kg of a 24,5 wt% PFPO ((2,2,3,3,4,4,5,5,6,6,7,7,8,8,9,9,9-heptadecafluorononyl)oxirane)/toluene solution very slowly (3.4 ml/min) to 20 kg 30wt% methylaluminoxane/toluene solution. The temperature was increased to 25°C and the solution was stirred for 60 minutes. After addition of 253 g of complex (Hf-content 78,8 w% in toluene) the solution was stirred for an additional two hours. That mixture was pumped at 5 1/h to the rotor stator with the rotor stator pair 4M. In the rotor stator with a tip speed of 4 m/s the mixture was mixed with a flow of 32 1/h of PFC (hexadecafluoro-1,3-dimethylcyclohexane) thus forming an emulsion. The droplets in the emulsion were solidified by an excess flow of 450 l/h PFC at a temperature of 60°C in a Teflon hose. The hose was connected to a jacketed 160 dm$^3$ stainless steel reactor equipped with a helical mixing element. In this reactor the catalyst particles were separated from the PFC by density difference. After the complex solution had been utilised the catalyst particles were dried in the 160 dm$^3$ reactor at a temperature of 70°C and a nitrogen flow of 5 kg/h for 4 h.

The obtained catalyst had an Al/ Mt ratio of 300; Hf - content of 0,7 wt% ; and an Al- content of 34,4 wt%.

Polymerisation Examples

Two-stage polymerisation

A loop reactor having a volume of 500 dm$^3$ was operated at 80 °C and 58 bar pressure. Into the reactor were introduced propane diluent, hydrogen and ethylene. In addition, polymerisation catalyst prepared according to the description above was introduced continuously into the reactor so that the polymerisation rate was as shown in Table 1.
The polymer slurry was withdrawn from the loop reactor and transferred into a flash vessel operated at 3 bar pressure and 70 °C temperature where the hydrocarbons were substantially removed from the polymer. The polymer was then introduced into a gas phase reactor operated at a temperature of 80°C and a pressure of 20 bar. In addition ethylene, hexene and hydrogen were introduced into the reactor. The conditions are shown in Table 1.

Table 1

| Property | Unit | Polymer 1 |
|---|---|---|
| **LOOP PREPOLY** | | |
| Temperature | °C | 80 |
| Pressure | Bar | 63 |
| catalyst feed | g/h | 15 |
| C$_2$ feed | kg/h | 2.0 |
| H$_2$ feed | g/h | 1.5 |
| C$_4$ feed | g/h | 33.2 |

(continued)

| Property | Unit | Polymer 1 |
|---|---|---|
| C$_3$ feed | kg/h | 50 |
| production rate | kg/h | 1.9 |
| **LOOP** | | |
| Temperature | °C | 80 |
| Pressure | Bar | 58 |
| C$_2$ feed | kg/h | 42 |
| H$_2$ feed (formier 25 %) | g/h | 12.7 |
| C$_3$ feed | kg/h | 97 |
| C$_2$ concentration | mol-% | 12.2 |
| H$_2$/C$_2$ ratio | mol/kmol | 0.17 |
| production rate | kg/h | 33.2 |
| Split | wt-% | 48 |
| | | |
| MFR$_2$ | g/10min | 13 |
| M$_w$ | | 68400 |
| Mn | | 17000 |
| density | kg/m3 | 961 |
| | | |
| Ash content | ppm | 320 |
| **GPR** | - | |
| Temperature | °C | 80 |
| Pressure | bar | 20 |
| C$_2$ feed | kg/h | 115.2 |
| H$_2$ feed (formier 25 %) | g/h | 0.1 |
| C$_6$ feed | kg/h | 0.9 |
| C$_2$ conc. | mol-% | 57 |
| H$_2$/C$_2$ ratio | mol/kmol | 0.08 |
| C$_6$/C$_2$ ratio | mol/kmol | 2.4 |
| C$_6$/C$_2$ feed ratio | g/kg | 7.8 |
| production rate | kg/h | 37 |
| | | |
| split (mass balance) | wt-% | 48.9 |
| Ash content | ppm | 180 |

Formier gas is a 25mol% hydrogen in nitrogen mixture

The polymer was received as a powder. The properties of the formed polymer are reported in Table 2.

| Designation | Polymer 1 |
|---|---|
| Density (kg/m$^3$) | 945 |

(continued)

| Designation | Polymer 1 |
|---|---|
| $\eta^*_{0.05}$ | 45900 |
| $\eta^*_{2.7kPa}$ | 45200 |
| $\eta^*_{5kPa}$ | 41900 |
| $MFR_{21}$ | 7,4 |
| $MFR_5$ | 0,65 |
| $SHI_{2.7/210}$ | 6,7 |
| Mn | 38800 |
| $M_w$ | 193000 |
| $M_w/M_n$ | 5 |
| max torque (dNm) | 6 |
| t90 (min) | 3,6 |
| XL% (0.60% peroxide) | 70% |
| XL% (0.85% peroxide) | 78.4% |

Low catalyst activity is obviously not desirable from a process economy point of view and neither from a product quality point of view as it leads to high ash contents in the polymer. High ash contents leads to undesirable feature such as yellowness, gels etc. Table 3 shows that ash content should be kept below a range between 250-500 ppm.

Table 3. Yellowness index vs. ash content for SSC resins in the form of pipes

| Yellowness index | Ash content (ppm) |
|---|---|
| 1 | <250 |
| 3 | 540 |
| 4 | 710 |
| 4 | 1680 |
| 4 | 2765 |

## Claims

1. A cross-linked polyethylene comprising a multimodal ethylene polymer with a density of less than 950 kg/m$^3$ obtained by polymerisation with a single-site catalyst and having an $MFR_{21}$ in the range of 2 to 15, a shear thinning index $SHI_{2.7/210}$ of between 5 and 10 which has been crosslinked.

2. A cross-linked polyethylene as claimed in claim 1 wherein said multimodal ethylene polymer has a density is in the range of 940 to less than 950 kg/m$^3$.

3. A cross-linked polyethylene as claimed in claim 1 to 2 wherein said multimodal ethylene polymer has an ash content of less than 350 ppm.

4. A cross-linked polyethylene as claimed in claim 1 to 3 wherein said multimodal ethylene polymer has a lower molecular weight ethylene homopolymer component and a higher molecular weight ethylene copolymer component.

5. A cross-linked polyethylene as claimed in claim 1 to 4 wherein said multimodal ethylene polymer has a lower molecular weight ethylene homopolymer component and a higher molecular weight ethylene hexene copolymer component.

**6.** A cross-linked polyethylene as claimed in claim 1 to 5 wherein said multimodal ethylene polymer has a degree of cross-linking of at least 70 wt%.

**7.** A cross-linked polyethylene as claimed in claim 1 to 6 wherein said multimodal ethylene polymer has a max torque value of at least 5 dNm.

**8.** A cross-linked polyethylene as claimed in claim 1 to 7 wherein said multimodal ethylene polymer has a complex viscosity at a shear stress of 0.05 rad/s at 190°C, $n^*_{0.05rad/s}$, of at least 20,000 Pas.

**9.** A cross-linked polyethylene as claimed in claim 1 to 8 wherein said multimodal ethylene polymer has a an Mw/Mn 4.5 to 8

**10.** A cross-linked polyethylene as claimed in claim 1 to 9 wherein said multimodal ethylene polymer has a total comonomer content of 0-0.5 mol%.

**11.** A cross-linked pipe comprising a crosslinked ethylene polymer as claimed in claim 1 to 10.

**12.** A process for the preparation of a cross-linked polymer as claimed in claim 1 to 10 comprising mixing a multimodal ethylene polymer as defined in claim 1 to 10 with 0.4 to 0.8 wt% peroxide and initiating a cross-linking reaction, e.g. by irradiation or application of heat.

**13.** Use of a multimodal ethylene polymer with a density of less than 950 kg/m$^3$ obtained by polymerisation with a single-site catalyst and having an MFR$_{21}$ in the range of 2 to 15, a shear thinning index SHI$_{2.7/210}$ of between 5 and 10 in the manfacture of a crosslinked pipe.

**14.** A multimodal ethylene polymer with a density in the range of 940 to less than 950 kg/m$^3$ obtained by polymerisation with a single-site catalyst and having an MFR$_{21}$ in the range of 2 to 15, a shear thinning index SHI$_{2.7/210}$ of between 5 and 10 and wherein said multimodal ethylene polymer has a lower molecular weight ethylene homopolymer component and a higher molecular weight ethylene copolymer component.

**15.** A polymer composition comprising a multimodal ethylene polymer as claimed in claim 14 and at least one additive and/or other olefinic component.

**Patentansprüche**

**1.** Vernetztes Polyethylen, umfassend ein multimodales Ethylenpolymer mit einer Dichte von weniger als 950 kg/m$^3$, das durch die Polymerisation mit einem Single-Site-Katalysator erhalten wird, einen MFR$_{21}$ in dem Bereich von 2 bis 15 und einen Strukturviskositätsindex SHI$_{2.7/210}$ zwischen 5 und 10 hat und das vernetzt wurde.

**2.** Vernetztes Polyethylen nach Anspruch 1, wobei das multimodale Ethylenpolymer eine Dichte in dem Bereich von 940 bis weniger als 950 kg/m3 hat.

**3.** Vernetztes Polyethylen nach Anspruch 1 bis 2, wobei das multimodale Ethylenpolymer einen Aschegehalt von weniger als 350 ppm hat.

**4.** Vernetztes Polyethylen nach Anspruch 1 bis 3, wobei das multimodale Ethylenpolymer einen Ethylen-Homopolymerbestandteil mit niedrigerem Molekulargewicht und einen Ethylen-Copolymerbestandteil mit höherem Molekulargewicht aufweist.

**5.** Vernetztes Polyethylen nach Anspruch 1 bis 4, wobei das multimodale Ethylenpolymer einen Ethylen-Homopolymerbestandteil mit niedrigerem Molekulargewicht und einen Ethylen-Hexen-Copolymerbestandteil mit höherem Molekulargewicht aufweist.

**6.** Vernetztes Polyethylen nach Anspruch 1 bis 5, wobei das multimodale Ethylenpolymer einen Vernetzungsgrad von mindestens 70 Gew.-% aufweist.

**7.** Vernetztes Polyethylen nach einem der Ansprüche 1 bis 6, wobei das multimodale Ethylenpolymer einen maximalen Drehmomentwert von mindestens 5 dNm aufweist.

8. Vernetztes Polyethylen nach Anspruch 1 bis 7, wobei das multimodale Ethylenpolymer bei einer Scherspannung von 0,05 rad/s und 190 °C, $n^*_{0,05 \text{ rad/s}}$, eine komplexe Viskosität von mindestens 20.000 Pas aufweist.

9. Vernetztes Polyethylen nach Anspruch 1 bis 8, wobei das multimodale Ethylenpolymer ein Mw/Mn von 4,5 bis 8 aufweist.

10. Vernetztes Polyethylen nach Anspruch 1 bis 9, wobei das multimodale Ethylenpolymer einen Gesamtcomonomergehalt von 0 - 0,5 Mol-% aufweist.

11. Vernetztes Rohr, umfassend ein vernetztes Ethylenpolymer nach Anspruch 1 bis 10.

12. Verfahren zur Herstellung eines vernetzten Polymers nach Anspruch 1 bis 10, umfassend das Mischen eines multimodalen Ethylenpolymers nach Anspruch 1 bis 10 mit 0,4 bis 0,8 Gew.-% Peroxid und das Initiieren einer Vernetzungsreaktion, z.B. durch Strahlung oder Hitzeanwendung.

13. Verwendung eines multimodalen Ethylenpolymers mit einer Dichte von weniger als 950 kg/m$^3$, das durch die Polymerisation mit einem Single-Site-Katalysator erhalten wird, einen $MFR_{21}$ in dem Bereich von 2 bis 15 und einen Strukturviskositätsindex $SHI_{2,7/210}$ zwischen 5 und 10 hat, bei der Anfertigung eines vernetzten Rohrs.

14. Multimodales Ethylenpolymer mit einer Dichte in dem Bereich von 940 bis weniger als 950 kg/m$^3$, das durch die Polymerisation mit einem Single-Site-Katalysator erhalten wird, einen $MFR_{21}$ in dem Bereich von 2 bis 15 und einen Strukturviskositätsindex $SHI_{2,7/210}$ zwischen 5 und 10 hat und wobei das multimodale Ethylenpolymer einen Ethylen-Homopolymerbestandteil mit einem niedrigeren Molekulargewicht und einen Ethylen-Copolymerbestandteil mit einem höheren Molekulargewicht aufweist.

15. Polymerzusammensetzung, umfassend ein multimodales Ethylenpolymer nach Anspruch 14 und mindestens einen Zusatzstoff und/oder anderen olefinischen Bestandteil.

**Revendications**

1. Polyéthylène réticulé comprenant un polymère d'éthylène multimodal ayant une masse volumique inférieure à 950 kg/m$^3$ obtenu par polymérisation avec un catalyseur à un seul site et ayant un $MFR_{21}$ dans la plage de 2 à 15, un indice de fluidification par cisaillement $SHI_{2,7/210}$ compris entre 5 et 10 qui a été réticulé.

2. Polyéthylène réticulé selon la revendication 1, dans lequel ledit polymère d'éthylène multimodal a une masse volumique dans la plage de 940 à moins de 950 kg/m$^3$.

3. Polyéthylène réticulé selon la revendication 1 à 2, dans lequel ledit polymère d'éthylène multimodal a une teneur en cendres inférieure à 350 ppm.

4. Polyéthylène réticulé selon la revendication 1 à 3, dans lequel ledit polymère d'éthylène multimodal a un composant homopolymère d'éthylène de masse moléculaire plus faible et un composant copolymère d'éthylène de masse moléculaire plus élevée.

5. Polyéthylène réticulé selon la revendication 1 à 4, dans lequel ledit polymère d'éthylène multimodal comprend un composant homopolymère d'éthylène de masse moléculaire plus faible et un composant copolymère d'éthylène-hexène de masse moléculaire plus élevée.

6. Polyéthylène réticulé selon la revendication 1 à 5, dans lequel ledit polymère d'éthylène multimodal a un degré de réticulation d'au moins 70 % en poids.

7. Polyéthylène réticulé selon la revendication 1 à 6, dans lequel ledit polymère d'éthylène multimodal a une valeur de couple maximale d'au moins 5 dNm.

8. Polyéthylène réticulé selon la revendication 1 à 7, dans lequel ledit polymère d'éthylène multimodal a une viscosité complexe sous une contrainte de cisaillement de 0,05 rad/s à 190° C, $n^*_{0,05rad/s}$, d'au moins 20 000 Pas.

9. Polyéthylène réticulé selon la revendication 1 à 8, dans lequel ledit polymère d'éthylène multimodal a un rapport Mw/Mn de 4,5 à 8.

10. Polyéthylène réticulé selon la revendication 1 à 9, dans lequel ledit polymère d'éthylène multimodal a une teneur totale en comonomère de 0 à 0,5 % en moles.

11. Tuyau réticulé comprenant un polymère d'éthylène réticulé selon la revendication 1 à 10.

12. Procédé de préparation d'un polymère réticulé selon la revendication 1 à 10 comprenant le mélange d'un polymère d'éthylène multimodal tel que défini dans la revendication 1 à 10 avec 0,4 à 0,8 % en poids de peroxyde et l'initiation d'une réaction de réticulation, par exemple, par irradiation ou application de chaleur.

13. Utilisation d'un polymère d'éthylène multimodal ayant une masse volumique inférieure à 950 kg/m$^3$ obtenu par polymérisation avec un catalyseur à un seul site et ayant un $MFR_{21}$ dans la plage de 2 à 15, un indice de fluidification par cisaillement $SHI_{2,7/210}$ compris entre 5 et 10 dans la fabrication d'un tuyau réticulé.

14. Polymère d'éthylène multimodal ayant une masse volumique dans la plage de 940 à moins de 950 kg/m$^3$ obtenu par polymérisation avec un catalyseur à un seul site et ayant un $MFR_{21}$ dans la plage de 2 à 15, un indice de fluidification par cisaillement $SHI_{2,7/210}$ compris entre 5 et 10 et dans lequel ledit polymère d'éthylène multimodal comprend un composant homopolymère d'éthylène de masse moléculaire plus faible et un composant copolymère d'éthylène de masse moléculaire plus élevée.

15. Composition de polymère comprenant un polymère d'éthylène multimodal selon la revendication 14 et au moins un additif et/ou un autre composant oléfinique.

**EP 2 350 139 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005095838 A
- EP 1927626 A
- EP 1927627 A
- WO 9618662 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 03051934 A
- WO 0022040 A

**Non-patent literature cited in the description**

- **HEINO, E.L. ; LEHTINEN, A. ; TANNER J. ; SEPPÄLÄ, J. ; NESTE OY.** Rheological characterization of polyethylene fractions. *Porvoo, Finland, Theor. Appl. Rheol., Proc. Int. Congr. Rheol,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995